# EUROPÄISCHE PATENTSCHRIFT

(11) **EP 1 705 460 B1**
(45) Veröffentlichungstag und Bekanntmachung des Hinweises auf die Patenterteilung: **15.06.2011**
(21) Anmeldenummer: 06111074.8
(22) Anmeldetag: 14.03.2006
(51) Int. Cl.: G01C 21/26, B60K 35/00

(54) **Verfahren und Vorrichtung zur Ausgabe einer Information**
Method of and device for information output
Procédé et dispositif d'affichage d'information

(30) Priorität: 24.03.2005 DE 102005013590
(43) Veröffentlichungstag der Anmeldung: 27.09.2006
(73) Patentinhaber: ROBERT BOSCH GMBH, 70442 Stuttgart (DE)
(72) Erfinder: Placke, Lars, 30163, Hannover (DE); Dorna, Michael, 74321, Bietigheim-Bissingen (DE)

(56) Entgegenhaltungen:
- DE-A1- 10 338 566
- US-A- 3 852 712
- US-A- 4 277 772

## Beschreibung

### Stand der Technik

Die Erfindung geht aus von einem Verfahren zur Ausgabe einer Information nach der Gattung des Hauptanspruchs. Es ist bereits bekannt, in einem Fahrzeug Informationen an einen Fahrer auf verschiedene Art auszugeben. Z.B. können Informationen akustisch über einen Lautsprecher oder in einer Anzeige mit verschiedenen Anzeigedarstellungen ausgegeben werden. Mitunter kann es dabei vorkommen, dass die zur Verfügung stehenden Ausgabemittel nicht dazu ausreichen, alle Informationen zugleich an den Fahrer zu übermitteln. Aus der DE 199 19 216 A1 ist ein Informationssystem in einem Fahrzeug bekannt, bei dem zu jedem Zeitpunkt höchstens eine der Fahrzeugführungsinfbrmationsquellen eine zugehörige Fahrzeugführungsinfortnation ausgibt. Die Informationsquellen werden hierbei anhand einer Priorisierung gesteuert. Gegebenenfalls ist es auch möglich, die Informationen abwechselnd anzuzeigen, wobei sie jeweils für eine gewisse Zeitdauer von beispielsweise 5 s optisch angezeigt werden.

Aus der US 4,277,772 ist ein Diagnose- und Warnsystem für ein Kraftfahrzeug bekannt, bei dem eine Vielzahl von Fahrzeugparametern überwacht wird. Im Falle eines Fehlers wird eine Fehlerlampe betrieben. Treten mehrere Fehler während des Betriebs auf, so wird die Betriebsdauer der Lampe heraufgesetzt.

Aus der US 3,852,712 ist eine rotierende Fahrzeuganzeige zur Darstellung verschiedener Fahrzeugfehler bekannt, bei der für den Fall, dass mehrere Fehler zeitgleich auftreten, für jeden einzelnen Fehler eine Mindestdauer der Anzeige eingehalten wird.

### Vorteile der Erfindung

Das erfindungsgemäße Verfahren mit den Merkmalen des Hauptanspruchs hat demgegenüber den Vorteil, dass die Informationen für eine Mindestdauer ausgegeben werden, die von dem Inhalt der auszugebenden Information und/oder von der jeweiligen Art der Informationsausgabe abhängt. Die Mindestdauer kann z.B. bei einer Ausgabe einer wichtigen Warnfunktion länger sein als bei einem bloßen Komforthinweis für einen Fahrer. Ferner kann z.B. eine Anzeige einer komplexen Grafik länger erfolgen, als eine gut fühlbare, haptische Warnung an den Fahrer ausgegeben wird. Durch die geeignete Wahl der Mindestdauer wird dabei sichergestellt, dass ein Fahrer die Information auch tatsächlich in ihrem vollen Informationsgehalt wahrnehmen kann. Insbesondere wird hierdurch vermieden, dass ein Benutzer durch Informationen, die er möglicherweise nur unvollständig wahrnehmen kann, mehr verunsichert wird, als ihm eine nur teilweise erfasste Information nützen kann. Das nur kurze Aufblinken einer Ausgabe also wird vermieden und es entsteht nicht mehr der Eindruck, dass ein Fahrer eine Meldung verpasst hat. Ein Zeitdruck für den Fahrer bei einer Erfassung von Informationen kann damit verhindert werden. Damit wird eine Überforderung des Fahrers durch ein Informationssystem vermieden. Auch die Akzeptanz von elektronischen Ausgaben, insbesondere für eine Fahrerunterstützung, kann hierdurch erhöht werden, so dass die Fahrsicherheit erhöht wird.

Es ist ferner vorteilhaft, dass erfindungsgemäß die Mindestdauer für die Informationsausgabe von der Verkehrssituation abhängt. Sie kann bei einer belastenden Verkehrssituation so erhöht werden, dass ein Fahrer eines Fahrzeugs die auszugebende Information auch in der Belastungssituation sicher wahrnehmen kann.

Durch die in den Unteransprüchen aufgeführten Maßnahmen sind vorteilhafte Weiterbildungen und Verbesserungen des im Hauptanspruch angegebenen Verfahrens zur Ausgabe einer Information möglich. Besonders vorteilhaft ist es, einer auszugebenden Information jeweils eine entsprechende Mindestdauer zuzuweisen. Hierdurch können die auszugebenden Informationen auch von einer dezentralen Ausgabeeinheit unter Berücksichtigung der jeweiligen, zugewiesenen Mindestdauer leicht verarbeitet werden.

Weiterhin ist es vorteilhaft, die Mindestdauer mit einer zunehmenden Komplexität der auszugebenden Information zu vergrößern. Durch die längere Mindestdauer wird sichergestellt, dass von einem Empfänger der Information diese auch unter Berücksichtigung der größeren Komplexität verarbeitet werden kann.

Ferner ist es vorteilhaft, dass eine Ausgabe weiterer Informationen so lange zurückgestellt wird, bis die Ausgabe der jeweiligen, vorherigen Information für die Mindestdauer ausgegeben wurde. Eine Irritation durch einen schnellen Wechsel der jeweiligen Informationsausgabe wird hierdurch vermieden. Gegebenenfalls können in einer weiteren Ausführungsform auch besonders wichtige Warnungen identifiziert werden, die stets unmittelbar ausgegeben werden. Diesen Warnungen wird damit ein besonderer Vorzug eingeräumt.

Ferner ist es vorteilhaft, dass die Ausgabe über die Mindestdauer verlängert werden kann, wenn nach einem Ablauf der Mindestdauer keine weitere Information zur Ausgabe ansteht. Ein unnötiges Ausblenden oder Abschalten der Informationsausgabe wird hierdurch erreicht. So lange keine weitere Information auszugeben ist, kann ein Benutzer die zuvor ausgegebene Information wahrnehmen. Diese Weiterbildung ist insbesondere für Ausgabearten vorteilhaft, die den Fahrer nicht oder nur wenig stören, wie z.B. optische Ausgaben. Insbesondere bei akustischen oder haptischen Ausgaben sollte die Ausgabe nach einer vorgegebenen Zeitspanne beendet, die jedoch auch länger sein kann als die vorgegebenen Mindestdauer.

Weiterhin ist es vorteilhaft, dass die Mindestdauer einer Informationsausgabe bei einer hohen Frequenz von auszugebenden Informationen erhöht wird. Durch eine höhere Frequenz bei der Informationsausgabe wird ein Fahrer stärker belastet. Dies kann durch eine Verlängerung der Mindestdauer für die Informationsausgabe kompensiert werden.

Messwerte in Bezug auf das Fahrzeug oder die Fahrzeugumgebung, anhand deren Auswertung die Mindestdauer gegebenenfalls korrigiert werden können, können einer Fahrerinformationsvorrichtung bevorzugt über eine Schnittstelle im Fahrzeug zugeführt werden.

### Zeichnung

Ausführungsbeispiele der Erfindung sind in der Zeichnung dargestellt und in der nachfolgenden Beschreibung näher erläutert. Es zeigen
Figur 1 eine erfindungsgemäße Fahrerinformationsvorrichtung zur Durchführung des erfindungsgemäßen Verfahrens,
Figur 2 ein zeitlicher Ablauf einer erfindungsgemäßen Informationsausgabe.

### Beschreibung des Ausführungsbeispiels

Die Erfindung kann für beliebige Fahrzeuge verwendet werden, ist aber insbesondere für Kraftfahrzeuge vorteilhaft, die sich im Straßenverkehr mit einer verhältnismäßig hohen Geschwindigkeit oder gegebenenfalls auch bei einer hohen Verkehrsdichte bewegen. Für eine sichere Steuerung des Fahrzeugs muss der Fahrer eine Vielzahl von Informationen berücksichtigen. Diese Informationen können sich z.B. auf die unmittelbare Fahrzeugumgebung beziehen, z.B. auf die Situation vor dem Fahrzeug selbst. Sie können aber auch die allgemeine Verkehrslage oder Witterungslage betreffen. Ferner können auch Informationen über den Fahrzeugzustand selbst, wie z.B. die aktuelle Fahrzeuggeschwindigkeit oder möglicherweise auftretende Fahrzeugfehlfunktionen, berücksichtigt werden.

Im Folgenden ist die Erfindung am Beispiel einer Fahrerinformationsvorrichtung 1 beschrieben, die mit verschiedenen Ausgabeeinrichtungen in einem Kraftfahrzeug verbunden ist. Verschiedene Informationen werden von der Fahrerinformationsvorrichtung 1 ausgewertet und in entsprechende Ausgaben an den Fahrer des Fahrzeugs umgewandelt.

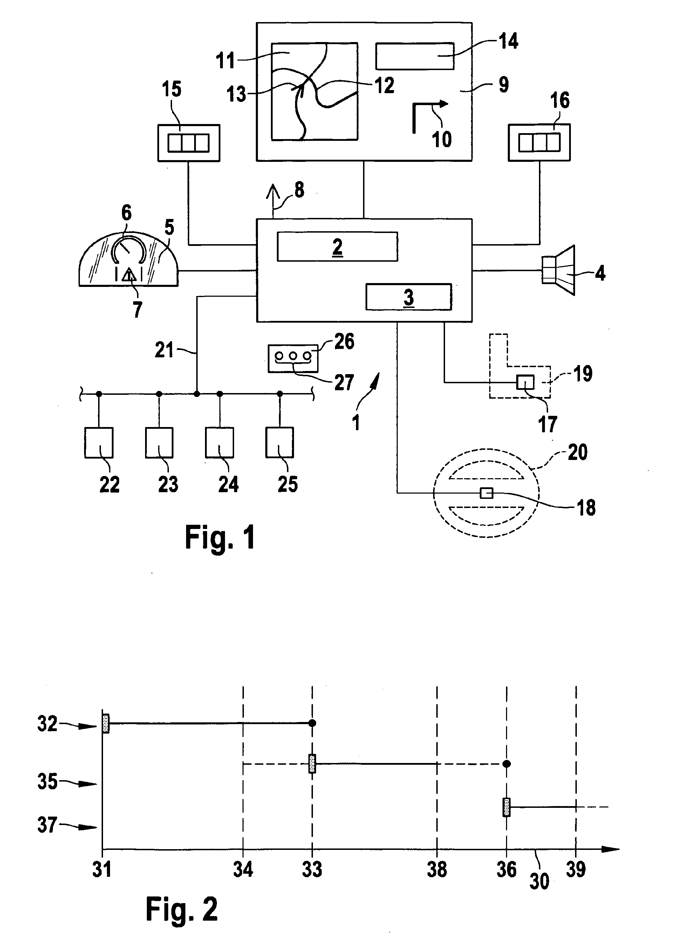

In der Figur 1 ist eine Fahrerinformationsvorrichtung 1 mit einer Recheneinheit 2 und einer Speichereinheit 3 dargestellt. In der vorliegenden Ausführungsform ist die Fahrerinformationsvorrichtung 1, die z.B. in der Mittelkonsole des Fahrzeugs angeordnet ist, als ein integriertes Bauteil dargestellt. Sie kann sich jedoch auch auf beliebige, insbesondere mit Datenleitungen verbundene Komponenten, aufteilen. Die Fahrerinformationsvorrichtung wird von einem Benutzer durch eine Bedieneinheit 26 gesteuert. Vorzugsweise weist die Bedieneinheit 26 Drucktasten 27 auf. Die Fahrerinformationsvorrichtung 1 ist mit einem Lautsprecher 4 zur Audioausgabe verbunden. Ferner ist eine Messwerteanzeige 5 mit der Fahrerinformationsvorrichtung 1 verbunden, die z.B. eine Geschwindigkeitsanzeige 6 aufweist. Ferner können in der Messwertanzeige 5 auch Warnsymbole 7 dargestellt werden. Die Fahrerinformationsvorrichtung 1 ist in einer weiteren Ausführungsform mit einer Antenne 8 verbunden, über die z.B. ein Radioprogramm empfangen und über den Lautsprecher 4 ausgegeben werden kann. In einer weiteren Ausführungsform weist die Fahrerinformationsvorrichtung 1 eine Navigationsfunktion auf, wobei die Recheneinheit 2 eine Fahrtroute von einem Startpunkt zu einem über die Bedieneinheit 26 eingegebenen Fahrziel bestimmt. Fahrhinweise zur Steuerung des Fahrzeugs, z.B. Abbiegehinweise, werden in einer Anzeige 9 ausgegeben. Die Fahrhinweise können dabei z.B. als Richtungspfeile 10 in der Anzeige 9 ausgegeben werden. Ferner ist es auch möglich, Fahrhinweise in eine Karte 11 einzutragen. Hierbei kann z.B. eine bevorzugte Route 12 und eine aktuelle Fahrzeugposition 13 angezeigt werden. Weitere Hinweise können z.B. als eine Textinformation 14 in der Anzeige 9 ausgegeben werden. Weiterhin ist es möglich, z.B. durch geeignete Anzeigen 15, 16 links und rechts im Fahrzeug, in einer jeweiligen, in den Anzeigen 15 und 16 vorgesehenen Balkenanzeige Abstände zu Hindernissen links und rechts von dem Fahrzeug darzustellen. Weitere Warnungen können über einen haptischen Geber 17 in einem Fahrersitz 19 ausgegeben werden. Der haptische Geber 17 versetzt dabei der Fahrersitz 19 in Vibration, so dass der Fahrer die erzeugte Vibration spüren kann. In einer weiteren Ausführungsform kann ein haptischer Geber 18 auch in einem Lenkrad 20 vorgesehen sein, so dass das Lenkrad 20 im Warnfall in Vibration versetzt wird.

Die Fahrerinformationsvorrichtung 1 ist über einen Datenbus 21 mit Sensoren und Messwertgebern im Fahrzeug verbunden. Über einen ersten Sensor 22 kann sie z.B. die aktuelle Fahrzeuggeschwindigkeit abrufen, wobei der Sensor 22 z.B. die Raddrehzahl misst. Über einen zweiten Sensor 23 kann die aktuelle Außentemperatur ermittelt werden. Ferner kann die Fahrerinformationsvorrichtung 1 mit einer Abstandsmessvorrichtung 24 verbunden sein, die den Abstand zu Hindernissen in der Fahrzeugumgebung misst. In einer weiteren Ausführungsform kann auch die aktuelle Sichtweite über eine optische Messeinheit 25 bestimmt werden. Beliebige andere Sensoren können an den Fahrzeugbus 21 angeschlossen werden. Die von den Sensoren 22, 23, 24, 25 gemessenen Daten werden von der Recheneinheit 2 verarbeitet und über die Ausgabemittel 5, 9, 15, 16, 4, 17, 18 werden an den Fahrer des Fahrzeugs die Daten selbst und/oder daraus abgeleitete bzw. darauf bezogene Hinweise ausgegeben. Die Recheneinheit 2 steuert die Ausgabemittel hierzu an. Für jede Ausgabe wird dabei eine Mindestverweildauer festgelegt. Die Mindestverweildauer bestimmt sich dabei aus einer geschätzten menschlichen Verarbeitungszeit für einen dargestellten Nachrichteninhalt. Anstelle oder zusätzlich zu dem Informationsinhalt kann für die Ausgabe auch die Art der Informationsausgabe berücksichtigt werden.

Im Folgenden sind einige Beispiele für verschiedene Informationsausgaben zusammengestellt. Wird z.B. ein Bedienelement 27 der Bedieneinheit 26 betätigt, so kann eine akustische Rückmeldung über einen erfolgten Tastendruck über den Lautsprecher 4 erfolgen. Für eine derartige Bestätigung wird eine Mindestdauer der Informationsausgabe von 0,1 s festgelegt. Eine entsprechende Bestätigung könnte z.B. auch dann erfolgen, wenn statt der Bedieneinheit 26 die Anzeige 9 als ein sogenannter Touch-Screen-Monitor ausgeführt ist, bei der in der Anzeige 9 dargestellte Bedienelemente von einem Benutzer durch Berühren betätigt werden. Statt oder ergänzend zu einer akustischen Rückmeldung könnte auch für den Zeitraum von 0,1 s eine optische Rückmeldung in der Anzeige 9 erfolgen.

Für die Anzeige eines Richtungspfeils 10 in der Anzeige 9 ist vorzugsweise eine Mindestdauer von 0,2 s vorgesehen. Insbesondere bei schnell aufeinander folgenden Kreuzungen kann hierdurch sichergestellt werden, dass der Benutzer zumindest den ersten Pfeil noch wahrgenommen hat. Wird der Pfeil um weitere grafische Angaben erweitert, wie z.B. eine Textinformation 14, die z.B. einen Straßennamen oder eine Entfernungsangabe beinhaltet, so wird diese mit einer Zusatzinformation kombinierte Information wenigstens für 1 s angezeigt.

Wird eine komplexe Kartengrafik dargestellt, die der Zielführung dient und in der eine aktuelle Fahrzeugposition 13 eingetragen ist, so erfolgt diese Ausgabe wenigstens für 1,5 s.

Wird über die Antenne 8 ein Radioprogramm empfangen, in dem Verkehrsnachrichten wiedergegeben werden, so werden diese akustisch über den Lautsprecher 4 ausgegeben. Es ist nicht sinnvoll, die ausgegebenen Verkehrsnachrichten zu unterbrechen, da eine abgebrochene Verkehrsmeldung für den Zuhörer gegebenenfalls vollständig unbrauchbar ist. Daher erfolgt die Ausgabe der Verkehrsnachrichten für die gesamte Nachrichtendauer.

Wird eine Kollisionswarnung ausgehend von der Abstandsmessvorrichtung 24 ausgegeben, z.B. bei einem Einparkvorgang, bei einem Spurwechsel oder bei einer zu starken Annäherung an ein vorausfahrendes Fahrzeug, so erfolgt bevorzugt eine kombinierte akustische und optische Warnung. Diese wird wenigstens für 0,8 s ausgegeben.

Verlässt ein Fahrer die von der Abstandsmessvorrichtung bzw. mit einer nicht gezeigten Kamera detektierte Fahrspur, erfolgen bevorzugt eine optische und eine haptische Rückmeldung. Z.B. kann der Fahrersitz 19 und/oder das Lenkrad 18 vibrieren, wobei zusätzlich eine Warnung z.B. in der Messwertanzeige als Warnsymbol 7 ausgegeben wird. Bei einer Spurverlassenswarnung ist beispielsweise eine Mindestdauer einer Warnung von 1 s vorgesehen.

Die Mindestdauern sind in einer ersten Ausführungsform in der Speichereinheit 3 für eine jeweilige Art der Informationsausgabe abgelegt. Sie können aber auch in Abhängigkeit von einem jeweiligen Informationsinhalt in der Speichereinheit 3 abgelegt werden. Wird z.B. ein Hindernis in einem größeren Abstand erfasst, so kann eine kürzere Mindestdauer für die Ausgabe vorgesehen sein, als bei einem Hindernis, das sich unmittelbar in der Fahrzeugumgebung befindet, da selbst nach einem Ablauf der Mindestdauer das Hindernis immer noch in der Fahrzeugumgebung selbst, wenn auch möglicherweise in einem größeren Abstand, zu erwarten ist.

In der Figur 2 ist eine zeitlich aufeinander folgende Ausgabe von drei Informationen über einer Zeitachse 30 dargestellt. Zu einem ersten Zeitpunkt 31 wird eine erste Information 32 ausgegeben. Diese erste Information 32 hat eine ihr zugewiesene Mindestdauer, die bis zu einem dritten Zeitpunkt 33 andauert. Zu einem zweiten Zeitpunkt 34, der zwischen dem ersten Zeitpunkt 31 und dem dritten Zeitpunkt 33 liegt, ergibt sich, dass eine zweite Information 35 durch die Fahrerinformationsvorrichtung 1 ausgegeben werden soll. Die Mindestdauer der Ausgabe der ersten Information 32, die von dem ersten Zeitpunkt 31 zu dem dritten Zeitpunkt 33 andauert, ist jedoch noch nicht abgelaufen. Deshalb wird die zweite Information erst ab dem dritten Zeitpunkt 33 ausgegeben. Sie wird zumindest so lange ausgegeben, wie ihre Mindestdauer bis zu einem vierten Zeitpunkt 38 andauert. Handelt es sich hierbei um eine Information, die in einer Anzeige dargestellt wird, so kann ihre Ausgabe noch bis zu einem fünften Zeitpunkt 36 verlängert werden, zu dem eine dritte Information 37 ausgegeben wird. Auch diese wird wieder zumindest bis zu einem Ablauf der Mindestdauer ihrer Ausgabe, einem sechsten Zeitpunkt 39, ausgegeben.

Die den einzelnen Informationen oder Informationsausgaben zugeordneten Mindestdauern können auch adaptiv angepasst, insbesondere verlängert, werden. Wird z.B. über den Sichtweitensensor 25 festgestellt, dass infolge von Nebel oder Regen eine schlechte Sicht vorliegt, so ist von einer höheren Belastung des Fahrers durch das Fahrgeschehen auszugehen. In diesem Fall können die Mindestdauern für Informationsausgaben generell um 50% verlängert werden. In einer anderen Ausführungsform kann auch durch eine Auswertung der Bedieneinheit 26 festgestellt werden, dass der Fahrer gerade durch eine Eingabe, z.B. durch eine Fahrzieleingabe für eine Navigationsfunktion, zumindest leicht abgelenkt ist. Auch in diesem Fall wären die Mindestdauern für eine Ausgabe um einen vorgegebenen Faktor, z.B. auf das Doppelte, zu verlängern. Die auszugebenden Informationen können z.B. Warnungen, Fahrempfehlungen und Verkehrsmeldungen umfassen.

In einer weiteren Ausführungsform wird die Mindestdauer einer Informationsausgabe auch mit einer steigenden Geschwindigkeit verlängert. So kann die Mindestdauer z.B. ausgehend von einem gespeicherten Mindestwert ab einem Überschreiten einer vorgegebenen Geschwindigkeitsschwelle von 50 km/h linear mit der Geschwindigkeit erhöht werden. In einer bevorzugten Ausführungsform wird dabei eine Verlängerung der Mindestdauer nicht alleine von einer höheren Geschwindigkeit abhängig gewählt, sondern sie wird nur bei einem Auftreten einer Zusatzbedingung eingestellt. Eine solche Zusatzbedingung könnte z.B. eine schlechte Sicht oder ein starkes Schwanken der Geschwindigkeit sein, Wobei ein Schwanken insbesondere durch ein Schwanken der Geschwindigkeit des Umgebungsverkehrs hervorgerufen wird.

Auch bei einer höheren Komplexität der Ausgabe kann die Mindestdauer erhöht werden. So ist z.B. ein Fahrer bei der Ausgabe eines Fahrhinweise für eine Zielführung, bei der ein Fahrer über die vorzunehmende Handlung, die vorgegebene Richtung, die vorgegebene Entfernung und in welche Straße er abbiegen muss, stärker abgelenkt. Diese Ausgabe könnte z.B. eine Anweisung sein, nach 200 m nach rechts in die Hauptstraße abzubiegen. Wird dagegen eine Information über die gerade gespielte Musik ausgegeben, z.B. der Titel, der Interpret und die Spieldauer eines Musikstücks, so kann diese Information durch den Fahrer möglicherweise schneller verarbeitet werden.

## Patentansprüche

1. Verfahren zur Ausgabe einer Information (32, 35, 37) in einem Fahrzeug, wobei die Information wenigstens für eine Mindestdauer ausgegeben wird, wobei die Mindestdauer der Informationsausgabe von der auszugebenden Information und/oder von der Art der Informationsausgabe abhängt, **dadurch gekennzeichnet, dass** die Mindestdauer für die Informationsausgabe von der Verkehrssituation derart abhängt, dass bei einer belastenden Verkehrssituation die Mindestdauer der Informationsausgabe erhöht wird.

2. Verfahren nach Anspruch 1, **dadurch gekennzeichnet, dass** einer auszugebenden Information jeweils eine entsprechende Mindestdauer der Informationsausgabe zugewiesen ist.

3. Verfahren nach einem der vorherigen Ansprüche, **dadurch gekennzeichnet, dass** mit einer zunehmenden Komplexität der auszugebenden Information die Mindestdauer vergrößert wird.

4. Verfahren nach einem der vorherigen Ansprüche, **dadurch gekennzeichnet, dass** eine Ausgabe weiterer Informationen zurückgestellt wird, bis die Information für die Mindestdauer ausgegeben wurde.

5. Verfahren nach einem der vorherigen Ansprüche, **dadurch gekennzeichnet, dass** die Ausgabe über die Mindestdauer verlängert wird wenn zu einem Ablauf der Mindestdauer keine weitere Information zur Ausgabe ansteht.

6. Verfahren nach einem der vorherigen Ansprüche, **dadurch gekennzeichnet, dass** die Mindestdauer einer Informationsausgabe in einer belastenden Situation mit einer hohen Frequenz unterschiedlicher Informationsausgaben erhöht wird.

7. Fahrerinformationsvorrichtung (1) in einem Fahrzeug, mit einem Ausgabemittel (4, 5, 9, 15, 16, 17, 18) zur Informationsausgabe, mit einer Recheneinheit (2) zur Steuerung einer Informationsausgabe und mit einem Speicher (3) zur Speicherung von Mindestdauern von Informationsausgaben, wobei die Mindestdauern der gespeicherten Informationsausgaben von der auszugebenden Information und/oder von der Art der Informationsausgabe abhängen, **dadurch gekennzeichnet, dass** die Mindestdauer für die Informationsausgabe von der Verkehrssituation derart abhängt, dass bei einer belastenden Verkehrssituation die Mindestdauer der Informationsausgabe erhöht wird.

8. Fahrerinformationsvorrichtung nach Anspruch 7, **gekennzeichnet durch** eine Schnittstelle (21) zum Empfangen von Messwerten des Fahrzeugs, wobei die Recheneinheit (2) die Mindestdauer einer Informationsausgabe in Abhängigkeit von wenigstens einem über die Schnittstelle (21) empfangenen Messwert verändert.

## Claims

1. Method for outputting information (32, 35, 37) in a vehicle, wherein the information is output for at least a minimum period, and wherein the minimum period of the outputting of information depends on the information which is to be output and/or on the type of information output, **characterized in that** the minimum period for the outputting of information depends on the traffic situation such that in a demanding traffic situation the minimum period of the outputting of information is increased.

2. Method according to Claim 1, **characterized in that** a corresponding minimum period of the outputting of information is respectively assigned to information which is to be output.

3. Method according to one of the preceding claims, **characterized in that** the minimum period is extended as the complexity of the information which is to be output increases.

4. Method according to one of the preceding claims, **characterized in that** the outputting of further information is postponed until the information has been output for the minimum period.

5. Method according to one of the preceding claims, **characterized in that** the outputting is extended beyond the minimum period if there is no further information to be output when the minimum period expires.

6. Method according to one of the preceding claims, **characterized in that** the minimum period of the outputting of information in a demanding situation is increased with a high frequency of different information outputs.

7. Driver information device (1) in a vehicle, having an output means (4, 5, 9, 15, 16, 17, 18) for outputting information, having a processing unit (2) for controlling an output of information, and having a memory (3) for storing minimum periods of information outputs, wherein the minimum periods of the stored information outputs depends on the information which is to be output and/or on the type of information output, **characterized in that** the minimum period for the outputting of information depends on the traffic situation such that in a demanding traffic situation the minimum period of the outputting of information is increased.

8. Driver information device according to Claim 7, **characterized by** an interface (21) for receiving measured values of the vehicle, wherein the processing unit (2) varies the minimum period of an outputting of information depending on at least one measured value received via the interface (21).

## Revendications

1. Procédé pour diffuser une information (32, 35, 37) dans un véhicule, selon lequel l'information est diffusée pendant au moins une durée minimale, la durée minimale de diffusion de l'information dépendant de l'information à diffuser et/ou de la nature de la diffusion de l'information, **caractérisé en ce que** la durée minimale de diffusion de l'information dépend de la situation du trafic, de telle sorte qu'en présence d'une situation de trafic chargée, la durée minimale de diffusion de l'information est augmentée.

2. Procédé selon la revendication 1, **caractérisé en ce qu'**une durée minimale correspondante de diffusion de l'information est à chaque fois affectée à une information à diffuser.

3. Procédé selon l'une des revendications précédentes, **caractérisé en ce que** la durée minimale est accrue lorsque la complexité de l'information à diffuser augmente.

4. Procédé selon l'une des revendications précédentes, **caractérisé en ce qu'**une diffusion d'informations supplémentaires est retenue jusqu'à ce que l'information ait été diffusée pendant la durée minimale.

5. Procédé selon l'une des revendications précédentes, **caractérisé en ce que** la diffusion est prolongée au-delà de la durée minimale lorsqu'aucune autre information à diffuser n'est en attente après écoulement de la durée minimale.

6. Procédé selon l'une des revendications précédentes, **caractérisé en ce que** la durée minimale de la diffusion d'une information dans une situation chargée avec une fréquence élevée de diffusion des différentes informations est augmentée.

7. Dispositif d'information du conducteur (1) dans un véhicule, comprenant un moyen de diffusion (4, 5, 9, 15, 16, 17, 18) pour diffuser des informations, comprenant une unité de calcul (2) pour commander une diffusion d'informations et comprenant une mémoire (3) pour mémoriser les durées minimales de diffusion des informations, dans lequel les durées minimales de diffusion des informations mémorisées dépendent de l'information à diffuser et/ou de la nature de la diffusion de l'information, **caractérisé en ce que** la durée minimale de diffusion de l'information dépend de la situation du trafic, de telle sorte qu'en présence d'une situation de trafic chargée, la durée minimale de diffusion de l'information est augmentée.

8. Dispositif d'information du conducteur selon la revendication 7, **caractérisé par** une interface (21) pour recevoir des valeurs mesurées du véhicule, dans lequel l'unité de calcul (2) modifie la durée minimale de diffusion d'une information en fonction d'au moins une valeur mesurée reçue par le biais de l'interface (21).
